# FASCICULE DE BREVET EUROPEEN

(11) **EP 1 003 981 B1**
(45) Date de publication et mention de la délivrance du brevet: **29.09.2004**
(21) Numéro de dépôt: 99957087.2
(22) Date de dépôt: 21.06.1999
(51) Int. Cl.: F16D 25/08, B21C 23/18

(54) **DISPOSITIF DE DEBRAYAGE A COMMANDE HYDRAULIQUE DOTEE D'UN TUBE DE GUIDAGE ET PROCEDE D'OBTENTION D'UN TEL TUBE.**
HYDRAULISCHE KUPPLUNGSVORRICHTUNG MIT EINER FÜHRUNGSHÜLSE UND VERFAHREN ZUR HERSTELLUNG EINER SOLCHEN HÜLSE
HYDRAULIC CONTROL CLUTCH DEVICE EQUIPPED WITH A GUIDE TUBE AND METHOD FOR PRODUCING SUCH A TUBE

(30) Priorité: 19.06.1998 FR 9807970
(43) Date de publication de la demande: 31.05.2000
(73) Titulaire: VALEO EMBRAYAGES s.a.s., 80009 Amiens Cedex 1 (FR)
(72) Inventeur: THOMIRE, Sylvain, F-92300 Levallois (FR)
(74) Mandataire: Lemaire, Marc
(86) Numéro de dépôt international: PCT/FR1999/001483
(87) Numéro de publication internationale: WO 1999/066226

(56) Documents cités:
- DE-A- 4 434 594
- DE-A- 19 523 011
- DE-A- 19 716 219
- US-A- 3 029 507
- US-A- 5 042 283
- PATENT ABSTRACTS OF JAPAN vol. 012, no. 424 (M-761), 10 novembre 1988 (1988-11-10) & JP 63 158330 A (KOYO SEIKO CO LTD), 1 juillet 1988 (1988-07-01)

## Description

La présente invention concerne un dispositif de débrayage pour embrayage, notamment pour embrayage mécanique à diaphragme de véhicule automobile.

L'invention concerne plus particulièrement un dispositif de débrayage à commande hydraulique comportant une butée de débrayage, propre à agir sur le dispositif débrayeur de l'embrayage, tel qu'un diaphragme, et portée par un piston monté mobile axialement, une cavité borgne d'orientation axiale définie dans une partie, dite partie fixe, comportant un corps extérieur et un tube-guide intérieur montés de manière concentrique, dans lequel le piston coulisse axialement le long du tube-guide et pénètre dans la cavité borgne définissant avec le piston une chambre à volume variable.

L'invention concerne également un procédé de fabrication du tube-guide.

Un tel dispositif de débrayage à commande hydraulique par l'intermédiaire du piston est décrit dans le document FR-A-2 730 532 ou DE-A-44 34 594.

Dans celui-ci, la cavité borgne est délimitée par le tube-guide ou tube de guidage et par le corps extérieur.

Ce tube présente un flasque à son extrémité arrière. Le flasque est pincé entre le corps extérieur et la partie fixe.

Un joint d'étanchéité intervient entre le flasque du tube-guide et le corps extérieur pour rendre étanche la cavité.

La cavité borgne annulaire d'orientation axiale est donc difficile à standardiser. Pour pallier, de manière simple et économique, cet inconvénient on peut songer à faire appel à une solution du type de celle décrite dans le document FR-A-2 531 164, c'est à dire à délimiter la cavité annulaire borgne d'orientation axiale par le tube de guidage présentant pour ce faire un fond reliant un tube externe à un tube interne de plus grande longueur.

Ceci peut être réalisé par emboutissage d'une tôle.

Une telle réalisation n'est pas entièrement satisfaisante car la coaxialité entre les tubes externe et interne n'est pas aussi bonne que souhaitée. En outre les faces respectivement interne et externe des tubes interne et externe ont une rugosité par aussi faible que souhaitée.

La présente invention a pour objet de pallier de manière simple et économique ces inconvénients. C'est donc un but de l'invention d'assurer une bonne coaxialité entre les tubes externe et interne.

C'est encore un but de l'invention d'obtenir une bonne qualité des faces des tubes interne et externe pour guidage du piston. Suivant l'invention, le tube de guidage est obtenu selon un procédé de filage au choc à partir d'une pastille, avantageusement à base d'aluminium. En variante la pastille est à base de magnésium ou d'acier doux, ou de laiton, ou de cuivre ou de tout autre matériau malléable. Le procédé fait appel à au moins un poinçon et une matrice pour écraser la pastille, pleine ou en variante trouée centralement, pour faire fluer le métal de celle-ci de manière guidée.

On obtient ainsi une bonne coaxialité entre les tubes interne et externe dont les faces respectivement externe et interne ou une faible rugosité permettant de ménager le joint du piston.

D'une manière générale on obtient un tube de guidage avec une bonne précision et une bonne qualité géométrique sans opération de reprise de la pièce.

On peut obtenir aisément une différence d'épaisseur entre les tubes externe et interne en jouant sur la taille du poinçon et de la matrice. Le fond de la cavité peut avoir la forme voulue et l'épaisseur désirée notamment en écrasant plus ou moins la pastille à l'aide du poinçon et en profilant la matrice.

Le fond peut donc avoir une plus grande épaisseur que les tubes interne et externe. Le corps extérieur peut être distinct du tube de guidage. En variante grâce au procédé selon l'invention le corps est d'un seul tenant avec le tube de guidage, qui comporte des moyens pour sa fixation à la partie fixe du véhicule.

Dans une première réalisation, le procédé de filage est réalisé à l'aide d'une première opération permettant d'obtenir un gobelet cylindrique, puis d'une deuxième opération d'emboutissage profond du fond du gobelet pour obtenir un tube-guide avec une cavité borgne annulaire d'orientation axiale délimité par un tube extérieur et intérieur concentriques. Dans ce cas la pastille est pleine. Dans une seconde forme de réalisation la pastille est centralement trouée en sorte que le tube de guidage peut être obtenu en une seule opération, la matrice étant alors admise à pénétrer dans le poinçon de forme creuse à l'aide d'un deuxième poinçon entourant le premier poinçon on peut former une collerette de fixation sur le tube de guidage. Le dispositif de débrayage est économique. Le tube de guidage peut avoir un tube externe de plus petite longueur ou de longueur égale au tube interne.

Ainsi, grâce à l'invention, on peut standardiser la cavité borgne et ce de manière simple et économique.

En effet, il suffit à chaque fois de modifier le corps extérieur en fonction des applications, notamment en fonction de la forme du carter sur lequel se fixe le corps extérieur.

Le corps extérieur peut être standardiser et se monter, par un montage du type baïonnette sur une semelle d'adaptation sur le carter. Un tel montage est décrit par exemple dans le document FR-A-2 745 616 dont le contenu est considéré comme annexé à la présente invention. On peut ainsi standardiser à la fois le tube-guide et le corps.

D'une manière générale, grâce à l'invention, on supprime le joint d'étanchéité supplémentaire intervenant dans l'art antérieur entre le corps et le flasque du tube-guide. Les risques de fuite sont ainsi réduits.

La cavité borgne se déforme moins sous l'effet des variations de pression se produisant lors des opérations de débrayage et d'embrayage, du fait que cette cavité est délimitée par une seule pièce.

On obtient ainsi un meilleur guidage du piston car les déformations du tube intérieur, que présente le tube-guide pour guidage du piston, sont réduites. Le dispositif de débrayage selon l'invention est donc plus robuste.

De plus, le joint d'étanchéité, que comporte le piston à son extrémité arrière, coopère uniquement avec le tube-guide selon l'invention ; c'est à dire avec une seule matière, en sorte que le choix de la matière du joint est plus facile. Ce joint est plus fiable. La durée de vie du dispositif est aussi augmentée et les risques de fuites diminués.

Le corps extérieur est en matière moulable, par exemple à base d'aluminium, ou de matière plastique en sorte que, dans tous les cas, on obtient une solution économique et légère. Le montage du corps sur le tube-guide est aisé. Par exemple, le corps est en matière plastique surmoulée sur le tube-guide.

En variante, le corps est matière plastique et est monté par encliquetage sur le tube-guide.

Le tube-guide peut être doté de creux ou de saillies pour son blocage en rotation par rapport au corps. Par exemple, lors de l'opération de surmoulage, la matière du corps rentre dans les creux ou enrobe les saillies du tube, tels que des emboutis. Grâce au filage au choc on obtient aisément les saillies ou les creux par exemple en forme d'échancrures.

L'arrêt axial du tube-guide est réalisé facilement, la matière du corps épousant le fond du tube-guide et venant en prise avec l'extrémité avant du tube extérieur que présente le tube-guide.

Dans tous les cas, clipsage ou surmoulage, le corps épouse la forme du fond et du tube extérieur du tube-guide.

Le corps rigidifie encore plus le tube-guide car il est en contact avec une surface de ce tube plus importante que celle de l'art antérieur.

Les déformations de la cavité borgne sont donc encore réduites. On peut percer le canal d'alimentation de la cavité après montage du corps, par exemple par surmoulage, sur le tube-guide.

Cette opération conduit également à percer le tube-guide pour communication de la cavité avec la cavité borgne.

Le corps porte une entrée dans laquelle s'étend le canal d'alimentation. L'entrée peut être venue de moulage avec le corps ou être rapportée de manière étanche sur le corps par exemple par soudage avec apport indirect de chaleur, tel qu'un soudage du type laser, par collage par soudage ultrason.

On appréciera que grâce au procédé de filage selon l'invention, on obtient un bon état de surface du tube-guide ce qui est favorable notamment pour le coulissement du piston et pour le joint du piston.

Le joint du piston subit des usures plus régulière car les lèvres qu'il présente ne coopèrent qu'avec un seul type de matériau du fait que la cavité est réalisée dans le tube-guide.

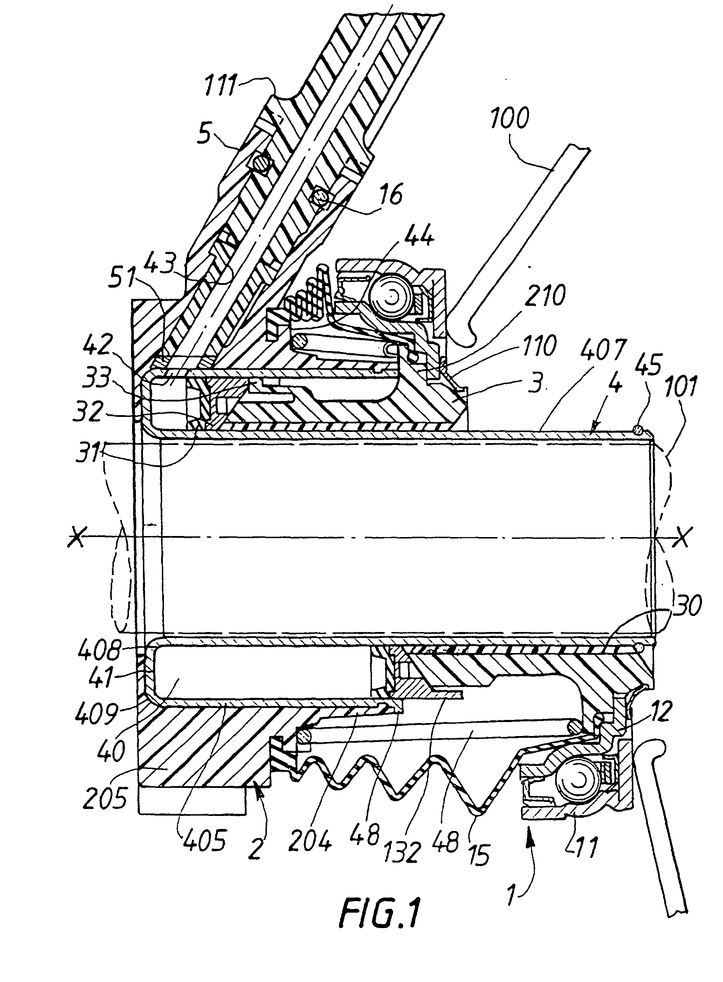

La description qui va suivre illustre l'invention en regard des dessins annexés dans lesquels la figure 1 est une vue en coupe axiale du dispositif de débrayage à commande hydraulique selon l'invention ;
- la figure 2 est une vue partielle à plus grande échelle de la figure 1 montrant l'entrée du dispositif de débrayage ;
- les figures 3A, 3C illustrent de manière schématique la première opération de filage au choc indirect pour la fabrication du tube de guidage du dispositif de débrayage ;
- les figures 4A, 4C illustrent de manière schématique l'opération d'emboutissage profond ou filage au choc direct pour la fabrication du tube de guidage ;
- la figure 5 illustre de manière schématique la deuxième opération de mise à longueur du tube de guidage concentrique ;
- la figure 6 est une vue en coupe axiale du tube de guidage équipé d'encoches d'arrêt en rotation ;
- la figure 7 est une vue selon la flèche 7 de la figure 6 ;
- les figures 8 et 9 sont des vues analogues aux figures 6 et 7 pour un autre exemple de réalisation avec des emboutis d'arrêt en rotation ;
- les figures 10 et 11 sont des vues identiques aux figures 6 et 7 avec le corps extérieur du dispositif de débrayage rapporté sur le tube de guidage concentrique ;
- les figures 12 et 13 sont des vues identiques aux figures 8 et 9 avec le corps extérieur du dispositif de débrayage rapporté sur le tube de guidage concentrique ;
- les figures 14 et 15 sont des vues en coupe axiale analogues aux figures 10 et 11 pour encore d'autres exemples de réalisation relative aux étanchéités ;
- la figure 16 est une demi-vue en coupe axiale d'un dispositif de débrayage pour encore une autre réalisation ;
- la figure 17 est une vue en coupe axiale de la pièce de liaison équipée du joint d'étanchéité délimitant de manière étanche la cavité borgne;
- la figure 18 est une vue en coupe axiale du soufflet de protection équipé d'une pièce de pression, que présente le soufflet du dispositif de débrayage ;
- la figure 19 est une vue en coupe axiale du piston du dispositif de débrayage pour une autre forme de réalisation ;
- la figure 20 est une vue analogue à la figure 19 pour encore une autre forme de réalisation ;
- la figure 21 est une vue en coupe partielle axiale du dispositif de débrayage sans le soufflet pour encore un autre exemple de réalisation;
- les figures 22A à 22C sont des vues analogues aux figures 3A à 3C pour encore un autre exemple de réalisation;
- Les figures 23A à 23C sont des vues analogues aux figures 3A à 3C pour un troisième exemple de réalisation du procédé ;
- la figure 24 est une vue en coupe axiale du tube de guidage dans les figures 23A à 23C.

On a présenté à la figure 1 un dispositif de débrayage à commande hydraulique pour un embrayage qui est ici un embrayage mécanique à diaphragme de véhicule automobile tel que décrit par exemple dans le document FR-A-2 730 532.

Le diaphragme 100 de l'embrayage constitue donc le dispositif débrayeur de l'embrayage sur lequel est propre à agir un élément d'attaque 11 appartenant au dispositif de débrayage.

L'élément d'attaque 11 est constitué ici par la bague extérieure tournante d'un roulement à billes. Cette bague est conformée pour agir ici en poussant sur l'extrémité interne des doigts que comporte le diaphragme 100.

La bague intérieure 12 du roulement est fixe en rotation ; des billes étant interposées entre les bagues 11, 12. Les bagues 11, 12 sont ici en tôle emboutie.

Bien entendu, on peut inverser les structures, la bague extérieure du roulement étant fixe en rotation, tandis que la bague intérieure du roulement est alors tournante.

Pour plus de précisions, on se reportera par exemple au document FR-A-2 730 532 précité.

Ainsi, la bague tournante peut être bombée ou plate pour contact ponctuel avec les doigts du diaphragme 100.

L'ensemble bague tournante 11, bague fixe 12, est appelé usuellement butée de débrayage 1 destiné à agir ici en poussant sur le diaphragme 100.

Cette butée 1 est soumise à l'action d'un organe de commande, qui est ici un piston 3 monté mobile axialement le long d'un tube-guide 4 métallique, dit aussi tube de guidage. La butée 1 est propre à agir sur le dispositif débrayeur 100 de l'embrayage et est portée par le piston 3.

Plus précisément, le dispositif hydraulique de débrayage illustré à la figure 1 est un dispositif de débrayage à commande hydraulique du type concentrique.

Ce dispositif hydraulique de débrayage constitue le récepteur hydraulique d'une commande hydraulique d'embrayage. Le fluide de commande peut être de nature liquide ou consister en de l'air comprimé. Dans tous les cas, la commande est appelée commande hydraulique.

Ce dispositif comporte donc une entrée 5, ici de forme tubulaire, sur laquelle se branche, ici de manière brochable à l'aide d'une épingle élastique 16, une conduite 111 reliée à la sortie d'un maître cylindre (non représenté) commandé par la pédale de débrayage, ou en variante par un actionneur comportant un moteur électrique relié à un calculateur pilotant le moteur électrique selon des programmes prédéterminés pour réaliser l'opération de débrayage. Le maître cylindre comporte un piston et une chambre hydraulique de commande à volume variable. Il en est de même du récepteur, c'est-à-dire du dispositif de débrayage selon l'invention.

Ainsi qu'on le sait, lorsque, par exemple, le conducteur agit sur la pédale de débrayage, le piston du maître cylindre est déplacé axialement pour expulser le fluide de commande vers le récepteur et pressuriser la chambre de commande hydraulique de commande du récepteur. Dans ce cas, le volume de cette chambre augmente et la butée de débrayage 1 est, avec le piston 3, déplacée vers la droite de la figure 1 comme visible dans la partie basse de cette figure 1. Dans ce cas, le diaphragme pivote et relâche son action sur le plateau de pression de l'embrayage pour libérer le disque de friction de l'embrayage.

Lorsque le conducteur relâche son action sur la pédale de débrayage, le piston du maître cylindre revient à sa position initiale et il en est de même du piston 3 du récepteur comme visible dans la partie haute de la figure 1.

La chambre de commande est alors dépressurisée, le retour s'effectuant sur l'action du diaphragme 100 repoussant la butée de débrayage 1 et le piston 3 vers la gauche de la figure 1. L'embrayage est alors engagé.

Un ressort de précharge 48 est prévu pour maintenir la bague tournante 11 en appui permanent sur le diaphragme.

Le ressort 48 agit axialement entre le corps 2 et le piston 3. Ce ressort 48 est comprimé lorsque l'embrayage est engagé (figure 1, partie haute) et est détendu lorsque l'embrayage est désengagé (figure 1, partie basse). Pour mémoire, on rappellera que lorsque l'embrayage est engagé, un couple est transmis du moteur du véhicule à l'arbre d'entrée 101 de la boîte de vitesses. Lorsque l'embrayage est désengagé, aucun couple n'est transmis, sachant que le disque de friction de l'embrayage est calé en rotation sur l'arbre 101 en étant destiné à être serré entre les plateaux de pression et de réaction de l'embrayage sous l'action du diaphragme. Tout ceci est bien connu et est décrit par exemple dans le document FR-A-2 730 532. Bien entendu, le dispositif de l'embrayage peut comporter des leviers de débrayage agissant sur des ressorts à boudin. Il peut consister en un faux diaphragme agissant sur une rondelle Belleville.

Ici, le fluide de commande est de l'huile, en variante, cela peut être de l'air comprimé, c'est donc par simplicité que le dispositif de débrayage, selon l'invention sera dénommé dispositif de débrayage à commande hydraulique.

Ce dispositif est du type concentrique car il est destiné à être traversé par un arbre, ici l'arbre 101 de la boîte de vitesses, représenté en pointillés à la figure 1.

Ce dispositif comporte donc un axe de symétrie axiale X-X, le tube-guide 4 entourant l'arbre d'entrée 101.

De manière précitée, ce dispositif comporte une chambre hydraulique de commande à volume variable délimité par le piston 3 monté mobile axialement le long du tube-guide 4.

La chambre est délimitée également par une cavité annulaire borgne 40 d'orientation axiale propre à être alimentée en fluide sous pression à partir de l'entrée tubulaire 5, qui débouche dans la cavité 40 au voisinage du fond 41 de celle-ci. La cavité 40 sert donc de réceptacle au fluide commande et au piston 3, plus précisément au joint 31 de celui-ci. Le piston 3 pénètre donc dans la cavité 40.

La cavité 40 est donc munie d'un orifice 42 débouchant dans le canal intérieur 43 formé à la faveur de la conduite 111 et de l'entrée 5. Cette cavité 40 est délimitée à l'arrière par son fond 41 et est fermée de manière étanche à l'avant par le piston 3.

La cavité 40 est définie par le tube 4 pour réduire les coûts. Ce tube-guide 4 est solidaire d'un corps 2 de forme globalement tubulaire forme avec celui-ci la partie dite partie fixe du dispositif hydraulique de débrayage.

Le corps 2 est conformé pour être fixé sur une paroi fixe, qui est ici la paroi avant du carter de l'embrayage ou le carter de la boîte de vitesses du véhicule.

Par exemple, comme décrit dans le document FR-A-2 753 505, une semelle est rapportée sur la paroi fixe du véhicule et des moyens de montage du type baïonnette interviennent entre le corps 2 et la semelle.

Ici, le corps 2 présente des oreilles non visibles à la figure 1 pour sa fixation à l'aide de vis sur la paroi fixe du véhicule comme décrit dans le document FR-A-2 730 532 précité.

D'une manière générale, le corps se monte directement ou indirectement sur une partie fixe du véhicule.

Le corps est en matière moulable, par exemple à base d'aluminium.

Ici, le corps 2 est en matière plastique moulable et l'entrée 5 est venue de moulage avec le corps 2.

Le corps 2 entoure le tube-guide 4 monté à l'intérieur du corps 2. Le corps 2 est donc un corps extérieur par rapport au tube-guide 4 formant tube intérieur. Le corps 2 et le tube 4 sont montés de manière concentrique en ayant le même axe X-X de symétrie axiale.

Le tube-guide 4 est le plus long axialement que le corps 2 et s'étend donc en saillie axiale par rapport au corps 2, ici extérieurement de diamètre étagé pour formation d'un épaulement d'appui 44 pour l'extrémité axiale arrière du ressort de précharge 48, dont l'autre extrémité (l'extrémité avant), s'appuie sur la face arrière d'une collerette 210, d'orientation globalement transversale, que présente en surépaisseur le piston 3 à son extrémité avant libre.

La face avant de la collerette sert d'appui à la bague intérieure 12, plus précisément à un rebord radial interne que présente la bague 12 à sa périphérie interne. Un ressort à action axiale 110 maintient le rebord radial interne en contact avec la collerette 210. Ce ressort 110 prend appui sur un épaulement, non référencé, que présente le piston 3 à son extrémité avant. La bague 12, et donc le roulement 1, peut se déplacer radialement au contact de la collerette 210 sous le contrôle du ressort 110, ici en forme de rondelle Belleville.

La butée de débrayage 1 est donc autocentreuse. En variante, la butée est emmanchée à force sur le piston 3 et n'est donc pas autocentreuse. Dans tous les cas, la butée 1 est attelée axialement au piston 3.

Le ressort de précharge 48 entoure l'extrémité avant 204 de plus petit diamètre du corps 2, l'extrémité arrière 205 du corps 2 de plus grand diamètre présente les oreilles de fixation à la paroi fixe du véhicule. L'entrée 5 est venue de moulage de l'extrémité arrière 205.

Un soufflet de protection est prévu. Ce soufflet 15 en matière élastomère, tel que du caoutchouc, entoure le ressort de précharge 48 et présente des bourrelets à chacune de ces extrémités. Les extrémités avant du bourrelet 15 et du ressort de précharge 48, exerçant une faible action sur le diaphragme 100, sont disposés de part et d'autre de la périphérie externe de la collerette 210, ce qui permet de ne pas avoir un appui du ressort 48 sur le soufflet 15 et d'utiliser la butée 1 pour immobiliser l'extrémité avant du soufflet. On réduit donc le nombre de pièces, car usuellement, le ressort 48 s'appuie sur l'extrémité avant du soufflet 15 par l'intermédiaire d'une pièce supplémentaire.

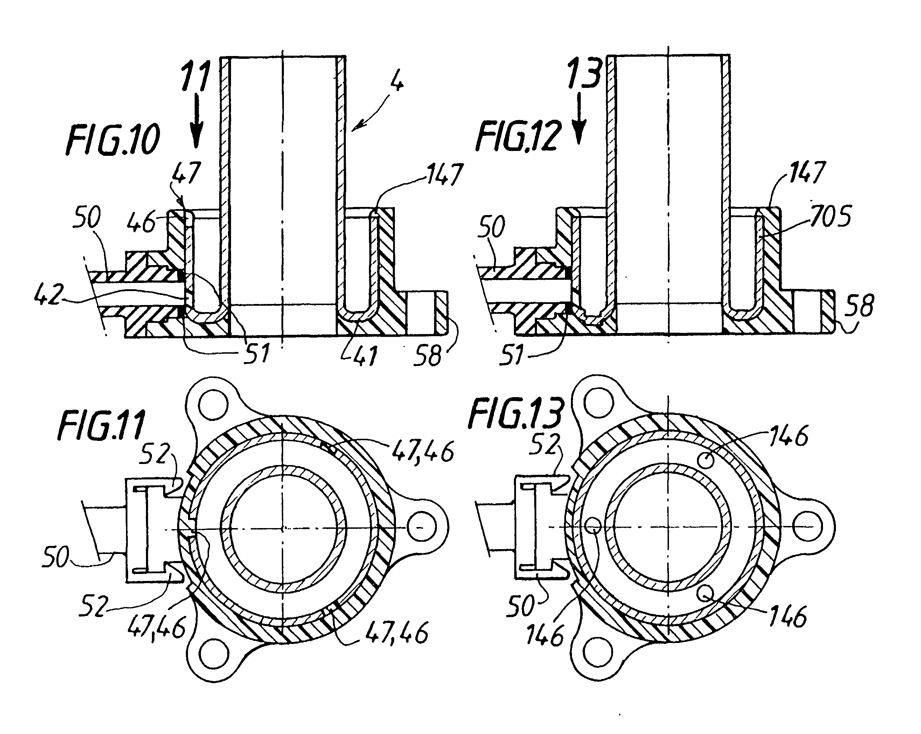

On notera que le rebord radial interne de la figure 12 présente deux portions décalées axialement et radialement l'une par rapport à l'autre pour respectivement serrer l'extrémité avant du soufflet 15 au contact de la face avant de la périphérie externe de la collerette 210 et venir au contact de la face avant de la collerette 210.

Le piston 3, de forme tubulaire réalisée en matière plastique par moulage, est guidé à coulissement axial le long de la périphérie externe du tube-guide 4 ici métallique, plus précisément le long d'un tube interne 407 appartenant au tube-guide 4.

Ce piston 3 présente à sa périphérie interne une douille 30. La douille 30 est solidaire du piston 3 et est en contact intime à sa périphérie interne avec la périphérie externe du tube 407.

La matière de la douille 30, ici en matière plastique, est choisie pour présenter de bonnes propriétés de coulissement.

Le piston 3 porte, à son extrémité libre avant, l'élément d'attaque 11 de manière précitée.

A son extrémité arrière, le piston 3 porte un joint dynamique d'étanchéité 31 fermant de manière étanche la cavité borgne 40 et donc la chambre à volume variable définie par le piston 3 et la cavité 40. Ce joint 31 présente des lèvres et est solidaire de la face arrière d'une pièce de liaison 32 en matière plastique. Cette pièce 32 présente une face avant en forme de portion de sphère pour coopérer avec la face arrière du piston en forme de portion de sphère complémentaire à celle de la pièce 32. En variante les dites faces sont de forme tronconique.

Cette pièce 32 présente à sa périphérie externe un rebord annulaire d'orientation axiale 132 s'étendant à jeu radial au-dessus de l'extrémité arrière du piston 3.

Le rebord 132 est doté de trous de forme oblongue dans lesquelles pénètrent à jeu axial, des saillies 33 issues de la périphérie externe du piston 3. Ainsi, un mouvement axial et de rotulage peut avoir lieu entre le piston 3 et la pièce de liaison 32, ce qui permet de ménager le joint 31.

En effet, les doigts du diaphragme 100 ne sont pas tous dans le même plan en sorte que la butée de débrayage peur osciller. Grâce à ses dispositions en position embrayage engagé. Le piston 3 peut se déplacer par rapport au joint 32.

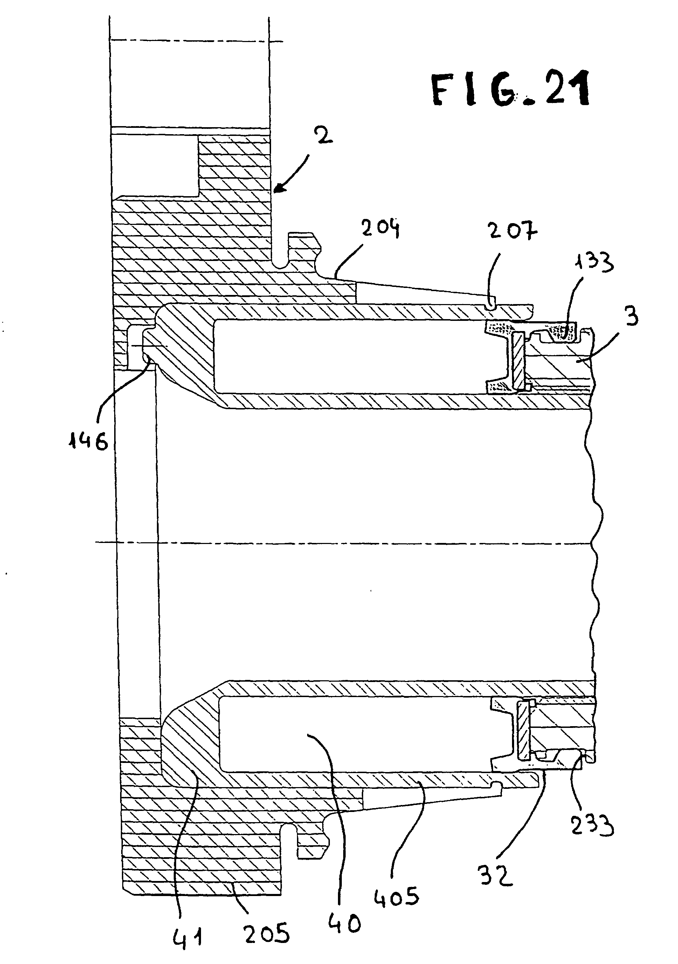

Une capacité de déplacement existe donc entre le joint 31, solidaire de la pièce 32, et le piston 3. En variante figure 21 on inverse les structures, les saillies 133 appartenant à la pièce 32 pour pénétrer à jeux axial et radial dans une gorge 233 du piston.

Le tube intérieur 407 de guidage présente à son extrémité avant une gorge pour réception d'un circlips 45 formant butée axiale pour le piston 3 et permettant d'éviter au joint 31 de s'échapper de la cavité 40. En outre, cela permet de former avant montage sur véhicule un ensemble manipulable et transportable, le piston 3 ne pouvant s'échapper sous l'action du ressort de précharge 48.

Le soufflet 15 évite que la cavité borgne 40 ne soit polluée par des impuretés.

Le dispositif de commande hydraulique selon l'invention est économique et léger. Il permet une standardisation de la cavité borgne 40 et l'adaptation du corps 2 aux différents montages sur véhicule. Cette solution permet de réduire le nombre de joints d'étanchéité.

Cela est dû au fait que la cavité borgne 40 est réalisée à la faveur du tube de guidage 4 ou tube-guide.

Ce tube de guidage 4 est réalisé selon l'invention par filage au choc à l'aide d'au moins un poinçon et une matrice en portant d'une pastille pleine ou creuse en matériau maléable.

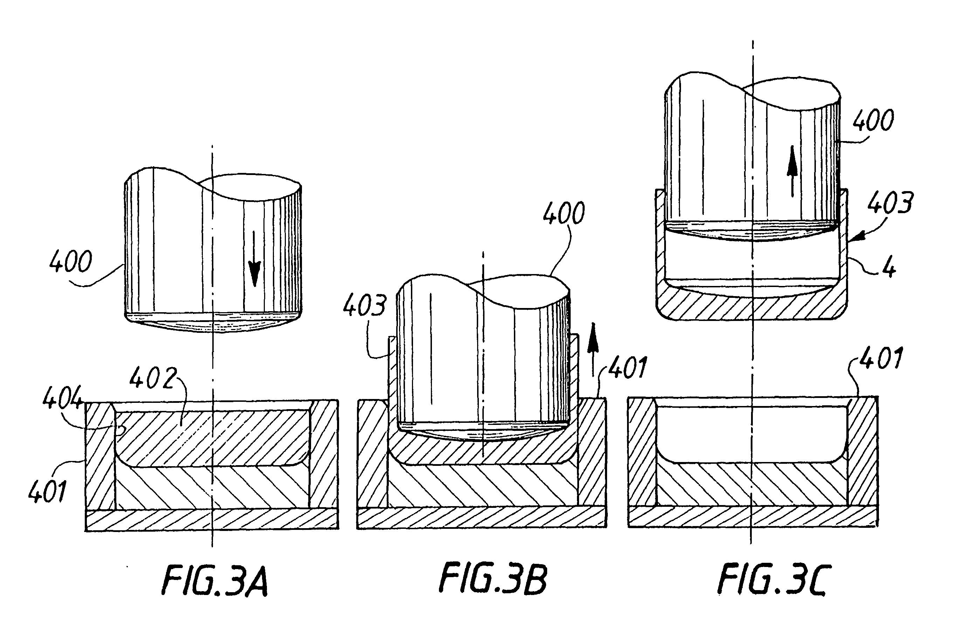

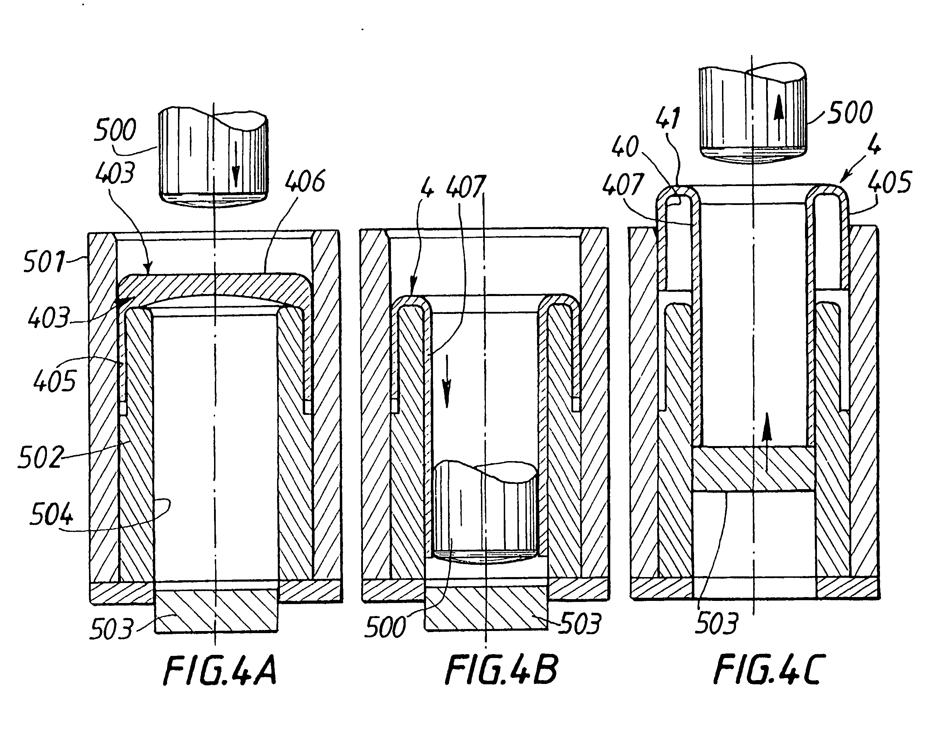

A la figure 1, ce filage est réalisé en deux opérations à savoir (figures 3A et 3C) une première opération de filage au choc indirect et une deuxième opération (figures 4A à 4C) d'emboutissage profond ou filage au choc direct.

Le tube 4 est réalisé à partir d'une pastille 402 pleine, ici à base d'aluminium.

Les opérations sont réalisées à la presse, de préférence à froid, à l'aide d'un poinçon mobile à extrémité bombée et d'une matrice fixe.

Lors de la première opération la pastille 402, de forme circulaire, est transformée en gobelet cylindrique 403.

Plus précisément la pastille 402 étant déposée dans une première matrice centralement creuse 401. (figure 3A), on fait descendre un premier poinçon 400 de taille inférieure au creux de la matrice 401 pour écraser la pastille 402 et former un gobelet (figure 3B).

Ensuite on remonte le poinçon 400 et le gobelet 403, de forme cylindrique grâce à l'espace annulaire existant entre la périphérie externe de forme cylindrique du poinçon 400 et le contour latéral cylindrique du creux borgne 404 de la matrice 401.

A la fin de la première opération le gobelet 403 présente donc un tube externe 405 et un fond 406 plus épais que le tube 405. Ensuite on retourne le gobelet 403.

Lors de la deuxième opération on dispose le gobelet, de manière retournée, dans une deuxième matrice fixe comportant deux parties tubulaires concentriques 501,502. Ces deux parties 501,502 ménagent entre elles un espace annulaire pour logement du tube externe 405 (figure 4A).

Un outil 503 est présent à la base de la matrice 501,502 et peut se déplacer axialement de manière complémentaire dans l'alésage interne 504 de la partie tubulaire interne 502 de la matrice 501, 502, qui ainsi est centralement creuse.

Il est prévu également au-dessus de la matrice 501, 502 un deuxième poinçon 500 qui peut se déplacer également axialement dans l'alésage 504. Un jeu annulaire est prévu entre la périphérie externe du poinçon 500 et le contour de l'alésage 504.

Ainsi le poinçon 500, lors de sa descente, est admis à venir en contact avec le fond 406 du gobelet et à déplacer la matière du fond 406 pour formation d'un tube interne 407 relié au tube externe 405 par un fond annulaire 41 d'orientation transversale par rapport à l'axe de symétrie axial X-X du dispositif hydraulique de débrayage selon l'invention.

Ensuite on remonte le poinçon 500 puis l'outil 503, formant éjecteur, pour extraire le tube-guide 4 comportant ainsi un tube interne 407 entouré par un tube externe 405 de plus petite longueur axiale que le tube interne 407 et un fond annulaire 41 reliant entre eux les tubes 405,407.

Le fond 41 se raccorde par des arrondis 408,409 respectivement aux tubes 407 et 405.

Ces arrondis 408,409 sont obtenus grâce à la forme de l'extrémité supérieure de la partie intérieure 501 de la matrice 501,504 et permettent au corps 2 de bien retenir le tube-guide 4.

En donnant une autre forme à cette dite extrémité supérieure on peut obtenir une autre forme, par exemple inclinée, pour le fond qui, ainsi, ne s'étend pas forcément transversalement. On appréciera que l'écrasement de la pastille 42, conduisant à un fluage de matière, et le déplacement de la matière de fond 406 sont aisés à réaliser lorsque la pastille 402 est en aluminium. On notera que le tube interne 407 guide le piston et constitue le tube-guide. Le tube externe 405 guide le joint 31 et la pièce 32 du piston 3. On notera que grâce au procédé de filage aux chocs les faces des tubes 405, 407 ont une bonne précision et une bonne qualité géométrique. Plus précisément ont obtient une très bonne coaxialité des tubes 405, 407 sans avoir à effectuer une opération de reprise.

La cavité borgne 40 est réalisée donc uniquement à partir du tube-guide 4 métallique de faible épaisseur et de forme robuste. Ensuite on réalise un trou 42 dans le tube supérieur 405 pour établir une communication entre le canal 43 et la cavité 40 de réception du piston 3. Les lèvres du joint 31 coopèrent respectivement avec la périphérie externe du tube interne 407 et la périphérie interne du tube externe 405 de plus faible longueur. Le joint 31 s'use de manière uniforme car il est en contact avec un seul matériau. En outre grâce au filage aux chocs selon l'invention, les périphéries respectivement interne et externe des tubes 405, 407 ne sont pas rugueuses et n'abîment pas le joint 31.

Le piston 3 avec son joint 3 et la pièce de liaison 32 se déplacent de manière étanche, grâce au joint 31, à l'intérieur de la cavité 40 alimentée en pression par l'orifice 42 implanté axialement entre le fond 41 et le joint 31 lorsque l'embrayage est engagé (figure 1).

L'orifice 42 réalisé dans le tube 405 débouche dans le volume de réserve minimal de la chambre à volume variable formée dans la cavité borgne 40 et délimitée par le piston 3 mobile axialement par rapport au corps 2 et au tube de guidage fixe.

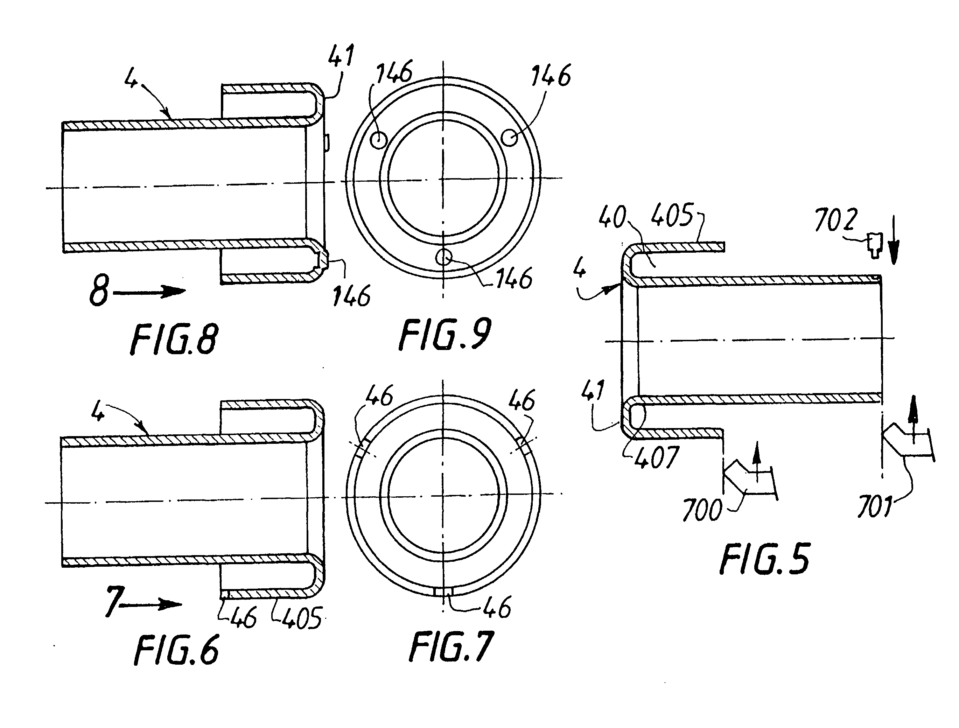

Bien entendu, après les deux opérations précitées, on réalise (figure 5) une mise à longueur du tube de guidage 4 concentrique de par la présence des tubes 405,407 parallèles entre eux et concentriques à l'axe X-X.

Ceci est réalisé à l'aide d'outils 700,701 se déplaçant selon les flèches de la figure 5 et remettant à longueur respectivement le tube externe 405 et le tube interne 407 plus long que le tube 405. A l'aide d'un outil 702, on réalise la gorge de logement du circlips 45, formant butée d'arrêt pour l'extrémité avant du piston 3.

Dans une forme de réalisation, le corps 2 en matière plastique est surmoulé sur le tube-guide 4. Pour cela on dote le tube 4 de moyens pour éviter une rotation du tube 4 par rapport au corps 2, ainsi que des moyens pour éviter un déplacement axial du tube 4 par rapport au corps 2.

Par exemple dans les figures 6 et 7 le tube externe 405 présente à son extrémité avant des encoches 46. Après surmoulage du corps 2, localement, de la matière 47 (figures 10 et 11) du corps 2 va pénétrer dans les encoches 46 pour assurer un blocage en rotation relatif du tube 4 par rapport au corps 2.

La matière 147 du corps épouse la forme du fond 41 et vient en contact avec la face avant du tube externe 405 en sort qu'un blocage axial du tube 4 est réalisé par rapport au corps 2.

Il en est de même dans les figures 12 et 13.

Le blocage relatif en rotation du tube 4 intérieur par rapport au corps extérieur 2 est réalisé à l'aide de saillies ici d'emboutis 146, réalisés dans le fond (figures 8 et 9).

Après surmoulage (figures 12 et 13) la matière 147 du corps 2 enrobe les emboutis 146 pour réaliser l'arrêt en rotation. D'une matière générale le corps 2 entoure le tube extérieur 405 et donc le tube de guidage 4. Le corps 2 est monté de manière concentrique par rapport aux tubes 405, 407 et présente un fond traversé par l'arbre 101 et servant de butée au fond 41. On appréciera que les encoches 46 et les emboutis 146 sont réalisés aisément lors des opérations précitées de filage aux chocs. Ainsi dans une forme de réalisation le premier poinçon 400 présente des saillies de forme complémentaire à celle des encoches 46. La position des saillies sur le poinçon 400 dépend des applications, notamment de la longueur du tube externe 405. Ainsi les encoches 46 sont formées à la figure 3B.

A l'aide de la partie 502 de la matrice, on peut réaliser aisément les emboutis 146. Pour cela, il suffit de prévoir des saillies à l'extrémité supérieure de la partie 502 pour réaliser à l'aide du deuxième poinçon 500 les emboutis 146 ici en forme de tétons cylindriques.

Grâce à l'invention les encoches 46 et les emboutis 146 peuvent avoir la forme désirée en dotant le premier poinçon 400 et la partie 502 de saillies de forme choisies.

Dans les figures précédentes les tubes 405, 407 et le fond 41 ont la même épaisseur, mais il n'en est pas forcément ainsi.

Par exemple à la lumière de la figure 4B en jouant sur le diamètre externe du deuxième poinçon 500, on peut obtenir un tube interne 407 plus épais que le tube externe 405.

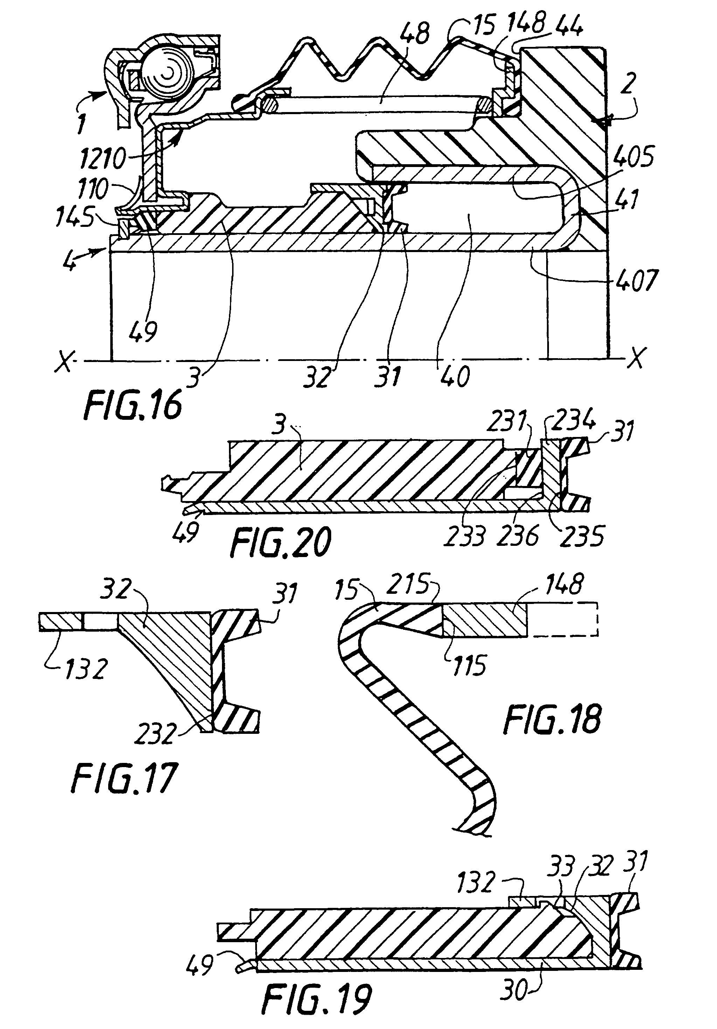

A l'aide notamment de la partie 502 de la matrice 501, 502 et en choisissant l'épaisseur du fond 406 du gobelet 403 on peut obtenir un tube-guide 4 avec un fond 41 d'épaisseur supérieure à celle des tubes 405, 407 comme visible à la figure 20.

Grâce à l'invention en jouant sur les déplacements axiaux des poinçons 400, 500 on peut maîtriser la longueur axiale des tubes 405, 407.

Le filage aux chocs permet donc d'obtenir de nombreuses possibilités.

Dans le mode de réalisation de la figure 1 le tube externe 405 présente à son extrémité avant un rebord annulaire radial 48 fragmentée dirigé vers l'extérieur, en direction opposée à l'axe X-X, pour coopération avec la face avant du corps 2.

Le blocage en rotation du tube 4 par rapport au corps 2 est réalisé à l'aide de crans 207, issus de la périphérie interne de l'extrémité avant 204 du corps 2, lesdits crans 207 pénétrant dans des empreintes creuses 208 réalisées à l'extrémité avant du tube extérieur 405. Le tube externe présente donc des creux pour son blocage en rotation par rapport au corps. En variante les creux sont remplacés par des saillies.

Le tube 4 peut être monté par encliquetage dans le corps 2 du fait que l'extrémité avant 204 du corps est de faible épaisseur.

Ainsi on enfile axialement le tube 4 dans le corps jusqu'à ce que les crans 207 tombent dans les empreintes 208. Axialement le tube 4 est alors bloqué par le rebord 48 du tube 405 et par le fond du corps 2 coopérant avec le fond du tube 4. Une telle réalisation étant également visible à la figure 21 dans laquelle l'extrémité avant 204 du corps 2 présente, à la faveur de fentes axiales, des pattes élastiquement déformable radialement et présentant les crans 207.

A la figure 1, l'entrée 5 est d'un seul tenant avec le corps 2.

Dans les figures 10 à 15, l'entrée 50 est rapportée sur le corps 2 par clipsage en 52, en variante, par collage, par frottement, montage baïonnette, vissage, brochage ou soudage par ultrason ou par apport indirect de chaleur tel qu'un soudage du type laser.

On notera que dans les figures 10, 12, 14 et 15, on voit en 58 l'une des oreilles de fixation du corps 2 à la partie fixe du véhicule. Les oreilles 58 sont d'un seul tenant avec le corps 2.

Dans les figures 10 à 12, une seule étanchéité 51 est nécessaire car l'entrée 50 est en contact avec le tube extérieur 405.

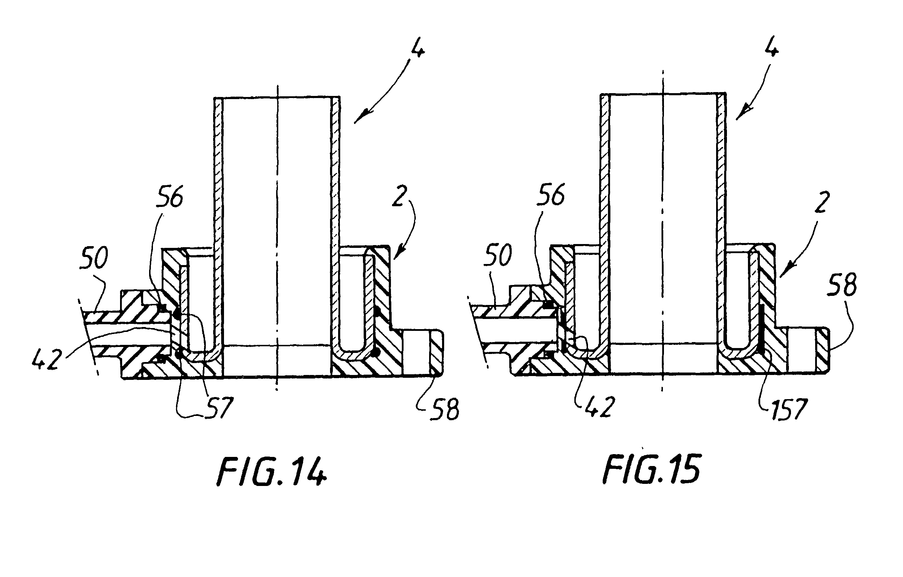

Dans les figures 14 et 15, il faut prévoir une première étanchéité 56 entre l'entrée 50 et le corps 2 et une deuxième étanchéité entre le corps 2 et le tube externe 405 car l'entrée 50 est montée sur le corps 2.

La première étanchéité 56 consiste par exemple en un joint torique.

A la figure 14, la deuxième étanchéité consiste en deux joints toriques 57, disposés de part et d'autre de l'orifice d'alimentation 42 de la cavité annulaire borgne 40.

Dans la figure 15, l'étanchéité consiste en une bande de caoutchouc trouée au niveau de l'orifice.

Ainsi qu'on l'aura compris, le tube 4 peut être standardisé. Ce tube présente un tube extérieur 405 s'étendant parallèlement au tube intérieur 407 de manière précitée.

Ainsi, à la figure 16, le tube est identique à celui des figures 8 et 9 ou 6 et 7.

Le corps 2 est fonction des applications, il en est de même du piston 3 et de la butée 1.

Dans cette figure 16, le piston 3 porte une collerette métallique 1210.

Cette collerette est rapportée par surmoulage ou encliquetage sur 1 'extrémité avant du piston 3.

La collerette 1210 est, par exemple, en tôle avec des pliages car cette collerette 1210 porte la rondelle élastique à action axiale 110 - ici, une rondelle Belleville - et l'extrémité avant du soufflet 15. La collerette 1210 sert d'appui à l'extrémité avant du ressort de précharge, les extrémités avant du soufflet 15 et du ressort 48 étant disposées de part et d'autre d'un épaulement transversal de la collerette 1210 conformée pour retenir l'extrémité avant du ressort 48.

L'extrémité arrière du ressort 48 est en appui contre une pièce intermédiaire de pression 148 pour coincer le bourrelet arrière du soufflet 15 entre la dite pièce 148 et l'épaulement 44 du corps 2.

Un joint racleur 49 est logé dans une cavité délimitée par une partie tubulaire de la collerette 1210 et par l'extrémité avant du piston 3. Le joint 49 évite notamment que les fuites d'huile atteignent les garnitures de friction de l'embrayage.

La butée d'arrêt consiste en un anneau fendu 145 au lieu du jonc 45 de la figure 1.

Le joint 31 est solidarisé par injection à la pièce de liaison 32 en sorte qu'il présente des pions traversant la pièce 32 et présentant une tête de l'autre côté de la pièce 32.

Un jeu radial existe, comme à la figure 1, entre la périphérie externe 132 de la pièce 32 et la périphérie externe du piston 3 pour autoriser un mouvement de rotule du piston 3 par rapport à la pièce 32.

Pour plus de précisions, notamment en ce que concerne la collerette 1210, on se reportera à la demande FR 97/15834 déposée le 11/12/1997 décrivant toutes ces dispositions.

La pièce de liaison 32 des figures 1 et 16, est relativement épaisse car le joint 31 est solidarisé par des pions injectés dans la pièce 32.

Pour réduire l'encombrement axial de l'ensemble pièce de liaison 32 - joint d'étanchéité 31, il est proposé (figure 17) de lier le joint 31 à la pièce de liaison 32 en matière plastique par une injection bi-matière dite aussi comoulage.

Dans cette figure 17, la surface de liaison 232 entre le joint 31 et la pièce de liaison 32 est constituée par la face arrière de la pièce 32.

L'épaisseur de la pièce 32 peut être ainsi réduite notamment à sa périphérie interne car aucun pion du joint à lèvre 31 ne traverse la pièce 32. Cela permet d'augmenter la surface de guidage de piston et/ou de réduire l'encombrement axial du dispositif de débrayage à commande hydraulique selon l'invention.

Bien entendu, on peut fixer la pièce de pression 148 en matière plastique de la figure 16 par injection bi-matière ou comoulage à l'extrémité arrière du soufflet 15 comme visible à la figure 18.

En variante, on fixe par comoulage ou injection bi-matière le soufflet 15 au corps 2 en matière plastique.

Comme visible à la figure 18, la surface de liaison 115 est constituée par la face interne d'une surépaisseur 215 constituant l'extrémité arrière du soufflet 15. La pièce 148 est simplifiée car elle est plate contrairement à celle de la figure 16.

Cela permet de réduire l'encombrement axial et d'éviter la formation d'un bourrelet à l'arrière du soufflet, dont le montage est simplifié.

Bien entendu, on peut conformer l'extrémité avant du soufflet 15 de manière similaire à l'extrémité arrière. Dans ce cas, l'extrémité avant du ressort 48 s'appuie sur la pièce de pression.

Bien entendu, on peut fixer le joint racleur 49 par comoulage ou injection bi-matière sur la douille 30 du piston 3 comme visible à la figure 19. La douille 30 en matière plastique est solidaire du piston. Le joint 49 est ainsi simplifié, plus économique car il fait appel à moins de matière, et moins encombrant axialement. Cela permet de réduire l'encombrement axial et/ou d'augmenter la longueur de guidage du piston.

Bien entendu, le piston peut être monté mobile axialement par rapport à la douille en matière plastique 30.

La douille 30 présente alors à son extrémité arrière un flasque annulaire d'orientation axiale 234 (figure 20).

C'est sur la surface arrière 235 de ce flasque 234 que l'on vient fixer par injection bi-matière le joint 31.

Un bloc en matière élastique 231, ici en élastomère tel que du caoutchouc, est fixé par injection bi-matière sur la face avant 236 du flasque 234 et sur la face arrière 233 du piston 3 qui ainsi peut se déplacer axialement par rapport à la douille 30 et au joint 31 lorsque l'embrayage est engagé sous l'effet de la rotation du diaphragme 100, dont les doigts ne sont pas tous dans le même plan en sorte que l'élément d'attaque 11 ; la butée 1 et le piston 3 sont admis alors à se déplacer axialement, plus précisément à vibrer axialement. Le bloc 231 amortit donc les vibrations.

Cette disposition permet de supprimer la pièce de liaison 32 des figures 1 ou 19 et de remplacer celle-ci par le flasque 234 plus simple et plus économique. La transmission des vibrations au joint 31 est encore plus limitée.

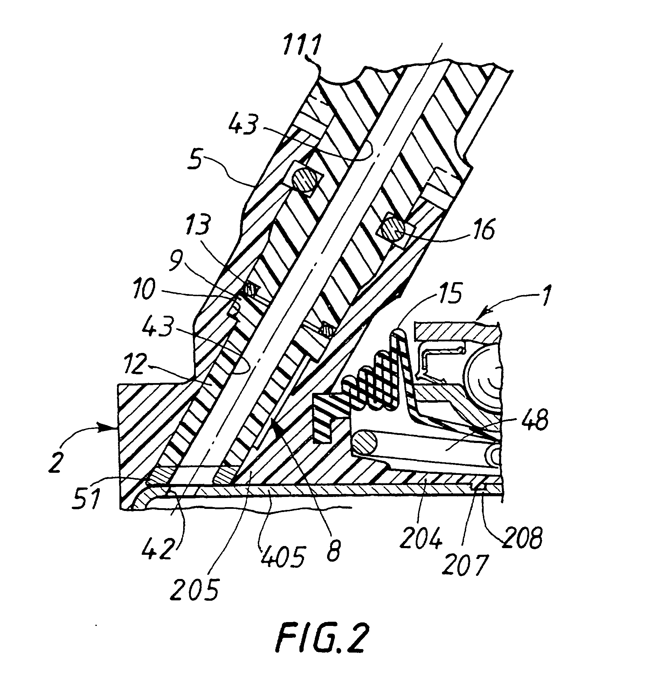

A la figure 2, on peut fixer le joint 51 par injection bi-matière sur un tube épaulé 12 en matière plastique montée sur l'entrée 5 intérieurement de diamètre étagé pour formation d'un épaulement 10, la tête 9 de plus grand diamètre du tube 12 s'étendant au-dessus de l'épaulement 10.

Le tube 12 présente une saillie axiale, formant clavette, engagée dans une rainure axiale de plus petit diamètre du tube 12. Ainsi des moyens de blocage en rotation 8 sont prévus entre le tube 12 solidaire du joint 51 et l'entrée 5.

Le tube 12 prolonge la conduite 111, le canal 43 étant formé à la faveur des alésages internes de la conduite 11 et du tube 12.

Un joint d'étanchéité torique 13 est prévu entre l'extrémité de la conduite 111 et la tête 10 du tube 12 maintenu en place grâce à l'épingle élastique 16 engagé dans une gorge réalisée à la périphérie externe de la conduite et dans deux passages réalisés à la périphérie interne de l'entrée 5 en vis à vis de la gorge.

Bien entendu, dans ce qui précède (figure 17 à 20), les joints 51, 31, 49, le soufflet 15 ou le bloc 231 sont en matière élastique - ici de l'élastomère tel que du caoutchouc - compatible avec la matière plastique de la pièce 12, 32, 30, 2, 148, 3, sur laquelle se fixe les joints, le soufflet ou le bloc.

Ainsi, par exemple, à la figure 20, la matière plastique de la douille 30 doit être compatible avec celle des joints 31, 49 et du bloc 231, tandis que la matière plastique du piston 3 est compatible avec celle du bloc 231 formant amortisseur.

L'injection bi-matière est réalisée par exemple à chaud en deux étapes.

Dans une première étape, on injecte dans le moule la matière plastique de la pièce concernée, puis avant refroidissement on injecte dans le même moule l'élastomère de la pièce en matière élastique concernée, notamment au niveau de la surface de liaison avec adhérisation de la matière élastique sur la matière plastique.

Par exemple, à la figure 17, on injecte dans le moule la matière de la pièce de liaison 32, puis, avant refroidissement de la pièce 32, on injecte l'élastomère du joint 31 dans le moule et ce en contact avec la surface de liaison 232.

L'avantage de l'injection bi-matière pour le dispositif hydraulique de débrayage est notamment de simplifier les pièces, de réduire l'encombrement axial et d'augmenter la longueur de guidage du piston. Cela favorise les montages.

En outre, il n'y a pas besoin d'agent d'addition pour réaliser l'adhésion de l'élastomère de la pièce en matière plastique 51, 49, 31, 231, 15 sur la pièce en matière élastique 12, 30, 32, 3, 149, 2. On obtient une bonne cohésion. On diminue les risques de ruptures.

En outre, on obtient une meilleure comptabilité avec les fluides de commande.

Par exemple, usuellement, l'agent d'adhésion est de la colle.

Grâce à l'injection bi-matière, on supprime la colle, ce qui permet de réduire l'encombrement.

En outre on n'a pas à maîtriser l'épaisseur de la colle, importante par la liaison ; une trop grande épaisseur de colle rendant la liaison fragile. Avantageusement la matière élastique, l'élastomère, est étanche. Ainsi le joint 31 et la matière 231 sont avantageusement étanches et dans une variante au lieu d'injecter la matière plastique dans le moule, on place cette matière plastique déjà injectée dans le moule, puis on injecte l'élastomère de la pièce en matière élastique concernée dans le moule avant refroidissement de la matière plastique. En variante au lieu d'injecter dans le moule l'élastomère de la pièce en matière plastique concernée, on place une galette d'élastomère dans le moule de la pièce concernée, et ce au-dessus de la pièce plastique, pour vulcanisation par compression dans le moule de la galette.

Bien entendu on réalise un collage au lieu d'une injection bi-matière on peut réaliser des collages.

Le mode de réalisation des figures 16 à 17 et 19 à 20 est applicable à n'importe quel type de cavité 40, par exemple celle décrite dans le document FR-A-2 730 532, néanmoins grâce à la cavité 40 obtenue par filage au choc on obtient de très bons résultats, le piston 3 des figures 19 et 20 se déplaçant dans de bonnes conditions du fait notamment de la bonne coaxialité des tubes 405, 407.

On appréciera que le dispositif de débrayage selon l'invention est léger car le corps 2 est avantageusement en matière plastique.

En outre, la cavité 40 est peu sensible aux variations de pression qui se produisent en son sein lors des opérations de débrayage et d'embrayage.

Dans les modes de réalisation précédents, le filage au choc est réalisé en deux opérations à l'aide de poinçons 400, 500 pleins pénétrant à l'intérieur de matrices de forme creuse.

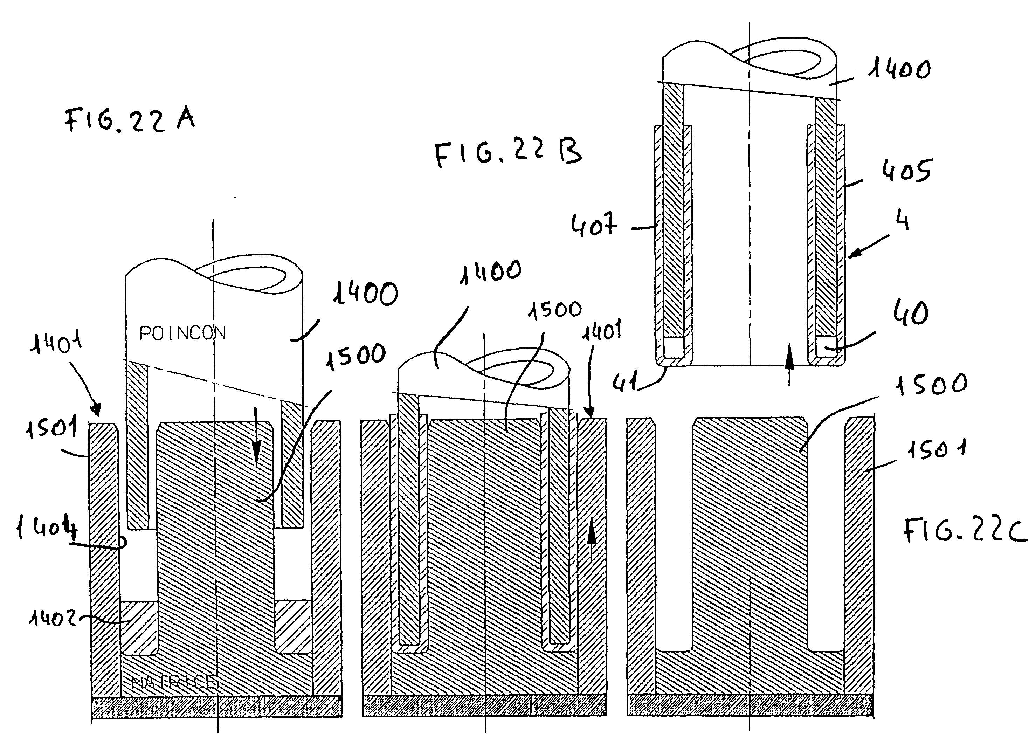

En variante figures 22A à 22C la pastille 1402 est centralement trouée, le poinçon 1400 est centralement creux et pénètre dans la matrice 1401 qui présente centralement une partie cylindrique 1500 à section en forme de T. La partie cylindrique est admise à pénétrer dans le poinçon 1400. La matrice présente donc de manière concentrique une partie externe 1501 à alésage interne 1404 et une partie centrale 1500 entourée par la partie externe 1501. Le trou central de la pastille 1402 dépend de la dimension de la partie centrale. Ainsi à la figure 22A on enfile la pastille 1402 sur le cylindre de la partie centrale 1500 jusqu'à ce que la pastille 1402 vienne en appui sur la base de la partie centrale 1500. La pastille est alors intercalée entre la partie externe 1501, de forme cylindrique, et la partie centrale. Ensuite on descend le poinçon 1400 pour écraser la pastille 1402 et former la cavité 40 (figure 22B) par filage de la matière, sous le choc du poinçon, le long de la matrice comme dans les autres réalisations. Ensuite on remonte le poinçon 1400 avec le tube de guidage 4 (figure 22C).

Grâce à cet outillage le filage au choc est réalisé en une opération sans retournement du tube de guidage. Ensuite on coupe le tube externe 405 pour lui donner la longueur voulue. En jouant sur la taille du poinçon 1400, notamment sur le diamètre de son alésage interne on peut obtenir un tube interne 407 de plus grande épaisseur que le tube externe 405 et vice versa. La forme de la base de la partie centrale 1500 permet de donner au fond 41 la forme voulue. Par exemple avec une base tronconique on obtient un fond 41 incliné.

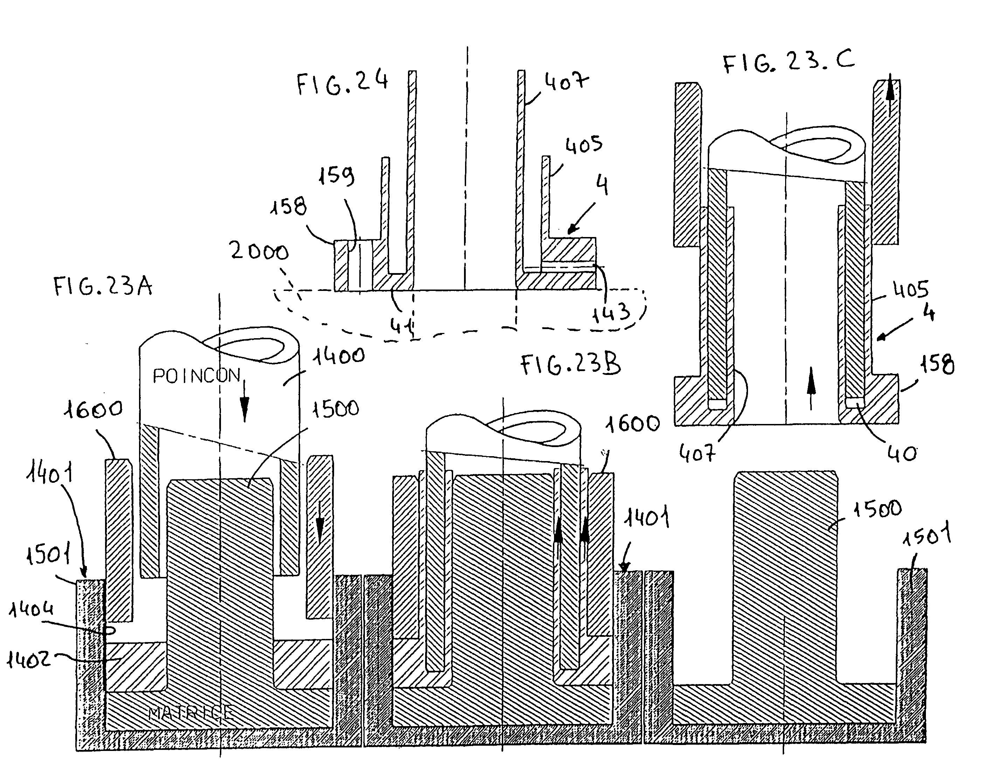

Dans les figures précédentes le corps extérieur est distinct du tube de guidage, à la figure 24 le tube de guidage 4 est d'un seul tenant avec le corps extérieur et comporte des moyens 158 pour sa fixation à la partie fixe du véhicule. Ces moyens consistent en une collerette saillante radialement vers l'extérieur. La collerette 158 prolonge radialement vers l'extérieur le fond 41 en étant plus épaisse que celui-ci, lui-même plus épais que les tubes externe 405 et interne 407.

La collerette 158 est dotée de perçage axiaux 159 pour passage d'organes de fixation à la partie fixe du véhicule ici le carter 2000 de la boîte de vitesses (figure 24).

Les organes de fixation sont usuellement des vis, les trous 159 étant répartis de manière régulière.

La collerette 158 permet ainsi de fixer directement le tube 4 sur le carter 2000.

La collerette 158 présente également un perçage radial 143 débouchant du fond de la cavité 40 pour alimentation de celle-ci. Ce perçage 143 remplace le canal 43 de la figure 1 en sorte que l'on supprime le joint d'étanchéité 51 de cette figure.

On peut rapporter sur la collerette un embout pour montage de la conduite 111 de la figure 1. Bien entendu le perçage 143 peut être fileté pour montage par vissage de la conduite. Ce perçage peut être incliné. Tout dépend des applications. La collerette est obtenue comme visible dans les figures 23A à 23C à l'aide d'un deuxième poinçon 1600 creux entourant le poinçon 1400 lui-même admis à entourer la partie centrale 1500, l'alésage interne 404 de la partie externe servant de guidage à la périphérie externe du deuxième poinçon 1600. On procède comme dans les figures 22A à 22B les deux poinçons 1400, 1600 écrasant la matière de la pastille 1402 qui flue file entre les deux poinçons 1400, 1600 pour former le tube externe 405. Comme dans les figures 22A à 22B la matière flue entre la partie centrale 1500 et le premier poinçon 1400 pour former le tube interne 1405. A la fin de l'opération on remonte les deux poinçons. Dans tous les cas l'alésage interne du premier poinçon 1400 a un diamètre supérieur au diamètre externe de la partie centrale 1500. Dans les figures 22A et 22B la matière flue entre le poinçon 1400 et la partie externe pour former le tube externe.

Dans les figures 22A à 23C les tubes externe 405 et interne ont la même longueur en sorte qu'il faut effectuer une opération de reprise pour couper le tube externe 405 à la longueur voulue comme à la figure 5.

L'extrémité du poinçon 1600 peut être dentelé pour faire varier l'épaisseur de la collerette 158.

La base de la partie centrale 1500 peut être dotée de saillie en sorte que la collerette peut être d'épaisseur variable pour s'adapter au contour de la boîte de vitesses.

Bien entendu on peut surmouler le corps externe sur la collerette 158 en sorte que le corps extérieur n'épouse pas forcément la forme du tube externe 405.*

La collerette 158 peut subir une opération de reprise et comporter des saillies séparées par des échancrures pour son montage du type baïonnette sur une semelle comme décrit dans le document FR-A-2 753 505.

## Revendications

1. Dispositif de débrayage à commande hydraulique pour embrayage doté d'un dispositif débrayeur (100), notamment pour embrayage mécanique de véhicule automobile, comportant un corps (2) pour fixation du dispositif de débrayage sur une partie fixe, un tube de guidage (4) métallique solidaire du corps (2) et destiné à être traversé par un arbre (101), une cavité borgne de forme annulaire (40), d'orientation axiale, ménagée dans l'ensemble corps (2) - tube de guidage (4), pour réception d'un fluide de commande, un piston (3), d'une part, pénétrant dans la cavité borgne (40) pour définir une chambre de commande à volume variable et, d'autre part, monté coulissant axialement le long du tube de guidage (4), un élément d'attaque (11) porté par le piston (3) pour action sur le dispositif débrayeur (100) de l'embrayage, dans lequel la cavité borgne (40) est réalisée dans le tube de guidage (4)et présente un tube interne (407) destiné à guider le piston (3) et entouré par un tube externe concentrique (405) ainsi qu'un fond (41) qui relie entre eux les tubes interne (407) et externe (405) **caractérisé en ce que** le tube de guidage (4) est obtenu par filage au choc à partir d'une pastille métallique (402, 1402).

2. Dispositif selon la revendication 1, **caractérisé en ce que** la pastille (402, 1402) est à base d'aluminium.

3. Dispositif selon la revendication 1, **caractérisé en ce que** le tube externe (405) est doté au voisinage de fond (41) d'un orifice (42) d'alimentation en fluide.

4. Dispositif selon la revendication 1, **caractérisé en ce que** le fond (41) est d'orientation transversale et se raccorde par des arrondis (408, 409) respectivement au tube interne (407) et au tube externe (405).

5. Dispositif selon la revendication 1 **caractérisé en ce que** le fond (41) est plus épais que les tubes interne (407) et externe (405).

6. Dispositif selon la revendication 1, **caractérisé en ce que** le corps extérieur est d'un seul tenant avec le tube de guidage (4) qui présente en saillie radiale des moyens pour sa fixation à la partie fixe.

7. Dispositif selon la revendication 1, **caractérisé en ce que** le corps extérieur est distinct et épouse la forme du fond (41) du tube de guidage.

8. Dispositif selon la revendication 1, **caractérisé en ce que** le corps extérieur (6) est distinct du tube de guidage (4) et épouse la forme du tube extérieur (405).

9. Dispositif selon la revendication 8, **caractérisé en ce que** le corps extérieur (6) est surmoulé sur le tube de guidage.

10. Dispositif selon la revendication 8, **caractérisé en ce que** le corps extérieur (6) est monté par encliquetage sur le tube de guidage (4).

11. Dispositif selon la revendication 8, **caractérisé en ce que** le tube de guidage (4) présente des creux ou des saillies coopérant avec le corps (2) pour blocage en rotation du tube de guidage (4) par rapport au corps (2).

12. Dispositif selon la revendication 11, **caractérisé en ce que** des saillies sous la forme d'emboutis (146) sont réalisées dans le fond (41) du tube de guidage (4).

13. Dispositif selon la revendication 12, **caractérisé en ce que** les creux consistent en des encoches (46) réalisées dans le tube externe (405).

14. Procédé d'obtention d'un tube de guidage (4) métallique du dispositif selon la revendication 1, ce tube métallique comprenant un tube interne (407), un tube externe (405) entourant concentriquement le tube interne, et un fond reliant les tubes interne et externe, **caractérisé en ce que** partant une pastille métallique pleine (402), on dispose celle-ci dans un creux (404) d'une première matrice (401), puis à l'aide d'un premier poinçon (400), on écrase la pastille (402) pour formation d'un gobelet cylindrique (403) délimité par un tube externe (405), **en ce que**, après formation du gobelet (403), on remonte le poinçon (400) et on dispose le gobelet dans une seconde matrice (501, 502) centralement creuse comportant un espace annulaire pour réception du tube externe (405) du gobelet (403), et **en ce que** à l'aide d'un second poinçon (500), on emboutit le fond (406) du gobelet (403), le dit poinçon pénétrant à l'intérieur de la matrice pour formation d'un tube interne (407) et d'un fond.

15. Procédé selon la revendication 14, **caractérisé en ce que** l'on relève le second poinçon (500), puis l'on éjecte le tube de guidage (4) à l'aide d'un éjecteur pénétrant dans l'alésage central de deuxième matrice (501, 502).

16. Procédé d'obtention d'un tube de guidage métallique du dispositif selon la revendication 1, ce tube métallique comprenant un tube interne, un tube externe entourant concentriquement le tube interne, et un fond reliant les tubes interne et externe, **caractérisé en ce que** partant d'une pastille centralement trouée (1402), on dispose celle-ci dans le creux (1404) d'une partie externe (1501) d'une matrice comportant une partie centrale (1500) sur laquelle on enfile la pastille (1402), puis à l'aide d'un poinçon creux (1400) à alésage interne de diamètre supérieur à celui de la partie centrale (1500) on écrase la pastille (1402) pour formation des tubes interne et externe et du fond du tube de guidage (4).

17. Procédé selon la revendication 16 **caractérisé en ce que** après formation du tube de guidage (4) on remonte le poinçon (1400) .

18. Procédé selon la revendication 17 **caractérisé en ce que** à l'aide d'un second poinçon (1600), guidé extérieurement par la partie externe de la partie externe (1501) de la matrice et entourant le premier poinçon (1400), on écrase localement la pastille pour formation d'une collerette sur le tube de guidage (4).

## Patentansprüche

1. Ausrückvorrichtung mit hydraulischer Betätigung für eine Kupplung mit einem Ausrücker (100), insbesondere für eine mechanische Kraftfahrzeugkupplung, umfassend einen Körper (2) zur Befestigung der Ausrückvorrichtung an einem ortsfesten Teil, ein fest mit dem Körper (2) verbundenes Führungsrohr (4) aus Metall, das für die Durchführung einer Welle (101) bestimmt ist, einen axial ausgerichteten ringförmigen Blindhohlraum (40), der in der Baueinheit Körper (2) - Führungsrohr (4) zur Aufnahme eines Betätigungsfluids vorgesehen ist, einen Kolben (3), der einerseits in den Blindhohlraum (40) eindringt, um eine Betätigungskammer mit veränderlichem Volumen zu definieren, und der andererseits axial verschiebbar entlang dem Führungsrohr (4) gelagert ist, ein am Kolben (3) angebrachtes Angriffselement (11), um auf den Ausrücker (100) der Kupplung einzuwirken, wobei der Blindhohlraum (40) in das Führungsrohr (4) eingearbeitet ist und ein inneres Rohr (407) aufweist, das zur Führung des Kolbens (3) bestimmt und von einem konzentrischen äußeren Rohr (405) umgeben ist, sowie einen Boden (41), der das innere (407) und das äußere Rohr (405) miteinander verbindet, **dadurch gekennzeichnet, dass** das Führungsrohr (4) eine durch Schlag-Strangpressen bearbeitete Metallplatte (402, 1402) ist.

2. Vorrichtung nach Anspruch 1, **dadurch gekennzeichnet, dass** die Platte (402, 1402) auf Aluminiumbasis ausgeführt ist.

3. Vorrichtung nach Anspruch 1, **dadurch gekennzeichnet, dass** das äußere Rohr (405) in der Nähe des Bodens (41) mit einer Öffnung (42) für die Fluidzuleitung versehen ist.

4. Vorrichtung nach Anspruch 1, **dadurch gekennzeichnet, dass** der Boden (41) quer ausgerichtet ist und sich über Abrundungen (408, 409) an das innere Rohr (407) bzw. an das äußere Rohr (405) anschließt.

5. Vorrichtung nach Anspruch 1, **dadurch gekennzeichnet, dass** der Boden (41) dicker als das innere (407) und das äußere Rohr (405) ist.

6. Vorrichtung nach Anspruch 1, **dadurch gekennzeichnet, dass** der äußere Körper einstückig mit dem Führungsrohr (4) ausgeführt ist, das radial vorstehend Mittel für seine Befestigung am ortsfesten Teil aufweist.

7. Vorrichtung nach Anspruch 1, **dadurch gekennzeichnet, dass** der äußere Körper getrennt ausgeführt und an die Form des Bodens (41) des Führungsrohrs angepasst ist.

8. Vorrichtung nach Anspruch 1, **dadurch gekennzeichnet, dass** der äußere Körper (6) getrennt vom Führungsrohr (4) ausgeführt und an die Form des äußeren Rohrs (405) angepasst ist.

9. Vorrichtung nach Anspruch 8, **dadurch gekennzeichnet, dass** der äußere Körper (6) auf dem Führungsrohr aufgeformt ist.

10. Vorrichtung nach Anspruch 8, **dadurch gekennzeichnet, dass** der äußere Körper (6) durch Verrasten am Führungsrohr (4) angebracht ist.

11. Vorrichtung nach Anspruch 8, **dadurch gekennzeichnet, dass** das Führungsrohr (4) Ausnehmungen oder Vorsprünge aufweist, die mit dem Körper zusammenwirken, um die Drehsicherung des Führungsrohrs (4) im Verhältnis zum Körper (2) herbeizuführen.

12. Vorrichtung nach Anspruch 11, **dadurch gekennzeichnet, dass** Vorsprünge in Form von Ausbuchtungen (146) in den Boden (41) des Führungsrohrs (4) eingearbeitet sind.

13. Vorrichtung nach Anspruch 12, **dadurch gekennzeichnet, dass** die Ausnehmungen aus Einschnitten (46) bestehen, die in das äußere Rohr (405) eingearbeitet sind.

14. Verfahren zur Herstellung eines metallischen Führungsrohrs (4) der Vorrichtung nach Anspruch 1, wobei dieses metallische Rohr ein inneres Rohr (407), ein das innere Rohr konzentrisch umgebendes äußeres Rohr (405), sowie einen das innere mit dem äußeren Rohr verbindenden Boden aufweist, **dadurch gekennzeichnet, dass** ausgehend von einer massiven Metallplatte (402) diese in eine Ausnehmung (404) einer ersten Matrize (401) eingelegt wird, woraufhin mit Hilfe eines ersten Stempels (400) die Platte (402) gestaucht wird, um einen zylindrischen Napf (403) zu bilden, der durch ein äußeres Rohr (405) begrenzt wird, dass nach der Bildung des Napfes (403) der Stempel (400) hochgezogen und der Napf in eine mittig hohle zweite Matrize (501, 502) eingelegt wird, die einen ringförmigen Zwischenraum für die Aufnahme des äußeren Rohrs (405) des Napfes (403) aufweist, und dass mit Hilfe eines zweiten Stempels (500) der Boden (406) des Napfes (403) tiefgezogen wird, wobei der besagte Stempel in das Innere der Matrize eindringt, um ein inneres Rohr (407) und einen Boden zu bilden.

15. Verfahren nach Anspruch 14, **dadurch gekennzeichnet, dass** der zweite Stempel (500) angehoben wird, woraufhin das Führungsrohr (4) mit Hilfe eines Auswerfers ausgeworfen wird, der in die mittige Bohrung der zweiten Matrize (501, 502) eindringt.

16. Verfahren zur Herstellung eines metallischen Führungsrohrs der Vorrichtung nach Anspruch 1, wobei dieses metallische Rohr ein inneres Rohr, ein das innere Rohr konzentrisch umgebendes äußeres Rohr sowie einen das innere mit dem äußeren Rohr verbindenden Boden aufweist, **dadurch gekennzeichnet, dass** ausgehend von einer mittig gelochten Platte (1402) diese in die Ausnehmung (1404) eines äußeren Teils (1501) einer Matrize eingelegt wird, die einen mittleren Teil (1500) umfasst, auf den die Platte (1402) aufgeschoben wird, woraufhin mit Hilfe eines hohlen Stempels (1400) mit einer Innenbohrung mit größerem Durchmesser als der mittlere Teil (1500) die Platte (1402) gestaucht wird, um das innere Rohr und das äußere Rohr sowie den Boden des Führungsrohrs (4) zu bilden.

17. Verfahren nach Anspruch 16, **dadurch gekennzeichnet, dass** nach der Bildung des Führungsrohrs (4) der Stempel (1400) wieder hochgezogen wird.

18. Verfahren nach Anspruch 17, **dadurch gekennzeichnet, dass** mit Hilfe eines zweiten Stempels (1600), der außen durch den äußeren Teil (1501) der Matrize geführt ist und der den ersten Stempel (1400) umgibt, die Platte örtlich gestaucht wird, um einen Kragen am Führungsrohr (4) zu bilden.

## Claims

1. A hydraulically controlled declutching device for a clutch having a declutching device (100), and especially for a mechanical clutch for a motor vehicle, the device comprising a body (2) for fastening the declutching device on a fixed part, a metallic guide tube (4) fixed to the body (2) and arranged for a shaft (101) to pass through it, an axially oriented annular blind cavity (40), for receiving a control fluid and formed in the assembly that consists of the body (2) and the guide tube (4), a piston (3) which firstly penetrates into the blind cavity (40) so as to define a variable volume control chamber, and which, secondly, is mounted for axial sliding movement along the guide tube (4), and an actuating element (11) carried by the piston (3) for acting on the declutching device (100) of the clutch, wherein the blind cavity (40) is formed in the guide tube (4) and has an inner tube (407) for guiding the piston (3), the inner tube being surrounded by a concentric outer tube (405), together with a base portion (41) which joins together the inner tube (407) and the outer tube (405), **characterised in that** the guide tube (4) is formed by impact drawing from a metal slug (402, 1402).

2. A device according to Claim 1, **characterised in that** the slug (402, 1402) is of an aluminium based material.

3. A device according to Claim 1, **characterised in that** the outer tube (405) has a fluid feed port (42) in the vicinity of its base portion (41).

4. A device according to Claim 1, **characterised in that** the base portion (41) is oriented transversely and is joined to the inner tube (407) and outer tube (405) by respective rounded portions (408, 409).

5. A device according to Claim 1, **characterised in that** the base portion (41) is thicker than the inner tube (407) and outer tube (405).

6. A device according to Claim 1, **characterised in that** the external body is integral with the guide tube (4), which has radially projecting means for fastening it to the fixed part.

7. A device according to Claim 1, **characterised in that** the external body is separate and follows the form of the base portion (41) of the guide tube.

8. A device according to Claim 1, **characterised in that** the external body (6) is separate from the guide tube (4) and follows the form of the outer tube (405).

9. A device according to Claim 8, **characterised in that** the external body (6) is formed by moulding on the guide tube.

10. A device according to Claim 8, **characterised in that** the external body (6) is snap-fitted on the guide tube (4).

11. A device according to Claim 8, **characterised in that** the guide tube (4) has recesses or projecting elements cooperating with the body (2) for preventing rotation of the guide tube (4) with respect to the body (2).

12. A device according to Claim 11, **characterised in that** projecting elements, consisting of press-formed elements (146), are formed in the base portion (41) of the guide tube (4).

13. A device according to Claim 12, **characterised in that** the recesses consist of notches (46) formed in the outer tube (405).

14. A method of making a metallic guide tube (4) for the device according to Claim 1, the said metallic tube comprising an inner tube (407), an outer tube (405) concentrically surrounding the inner tube, and a base portion joining the inner and outer tubes together, **characterised in that**, starting with a solid metal slug (402), the latter is placed in a recess (404) in a first die (401), and then with the aid of a first punch (400), the slug (402) is deformed so as to form a cylindrical cup (403) bounded by an outer tube (405), **in that**, after formation of the cup (403), the punch (400) is raised and the cup is placed in a second die (501, 502) which is hollow in the centre and defines an annular space for receiving the outer tube (405) of the cup (403), and **in that**, with the aid of a second punch (500), the base portion (406) of the cup (403) is press-formed, with the said punch penetrating into the interior of the die so as to form an inner tube (407) and base portion.

15. A method according to Claim 14, **characterised in that** the second punch (500) is withdrawn, and the guide tube (4) is then ejected with the aid of an ejector penetrating into the central bore of the second die (501, 502).

16. A method of making a metallic guide tube for a device according to Claim 1, the said metallic tube comprising an inner tube, an outer tube concentrically surrounding the inner tube, and a base portion joining the inner and outer tubes together, **characterised in that**, starting with a slug (1402) with a central hole, the latter is disposed in the recess (1404) of an external portion (1501) of a die which has a central portion (1500) over which the slug (1402) is fitted, and then, with the aid of a hollow punch (1400) having an internal bore with a diameter greater than that of the central portion (1500), the slug (1402) is deformed so as to form the guide tube (4).

17. A method according to Claim 16, **characterised in that**, after formation of the guide tube (4), the punch (1400) is raised.

18. A method according to Claim 17, **characterised in that**, with the aid of a second punch (1600), guided externally by the external portion of the external portion (1501) of the die and surrounding the first punch (1400), the slug is deformed locally so as to form a collar portion on the guide tube (4).
